# FASCICULE DE BREVET EUROPEEN

(11) **EP 3 793 845 B1**
(45) Date de publication et mention de la délivrance du brevet: **03.07.2024**
(21) Numéro de dépôt: 19790259.6
(22) Date de dépôt: 16.05.2019
(51) Int. Cl.: B60C 15/06, B60C 9/02, B60C 23/04

(54) **PNEUMATIQUE POIDS-LOURD EQUIPE D'UN MODULE DE COMMUNICATION RADIOFREQUENCE**
REIFEN FÜR SCHWERLASTKRAFTWAGEN, AUSGERÜSTET MIT EINEM RADIOFREQUENZKOMMUNIKATIONSMODUL
TYRE FOR A HEAVY GOODS VEHICLE, EQUIPPED WITH A RADIO-FREQUENCY COMMUNICATION MODULE

(30) Priorité: 17.05.2018 FR 1854101
(43) Date de publication de la demande: 24.03.2021
(73) Titulaire: COMPAGNIE GENERALE DES ETABLISSEMENTS MICHELIN, 63000 Clermont-Ferrand (FR)
(72) Inventeur: BESTGEN, Luc, 63040 CLERMONT-FERRAND Cedex 9 (FR); HINC, Henri, 63040 CLERMONT-FERRAND Cedex 9 (FR); MARCHAL, Jean-Louis, 63040 CLERMONT-FERRAND Cedex 9 (FR)
(74) Mandataire: M.F.P. Michelin
(86) Numéro de dépôt international: PCT/FR2019/051121
(87) Numéro de publication internationale: WO 2019/220064

(56) Documents cités:
- EP-A1- 3 196 056
- WO-A1-2016/193457
- WO-A1-2018/011510
- FR-A1- 2 936 185

## Description

### Domaine de l'invention

La présente invention est relative aux pneumatiques, et plus particulièrement à un pneumatique équipé d'un module de communication radiofréquence.

### État de la technique

On connaît déjà dans l'état de la technique, notamment d'après EP 1 977 912 B1, un pneumatique de type poids-lourd équipé d'un module de communication radiofréquence. Dans ce document, le module de communication radiofréquence comprend un transpondeur à identification par radiofréquence passif muni d'une antenne rayonnante hélicoïdale formant dipôle. Ce type de transpondeur est généralement désigné par le sigle anglais RFID. Un tel transpondeur peut stocker des données, par exemple relatives à l'identification, au type et/ou à la date de fabrication du pneumatique.

Le pneumatique décrit dans EP 1 977 912 B1, tel qu'illustré aux figures 1 à 3, est destiné à être monté sur une jante creuse (15° drop centre). Ce pneumatique comprend une armature de carcasse radiale, constituée d'une unique couche d'armature de carcasse formée d'éléments de renforcement insérés entre deux couches de calandrage de mélange caoutchouteux, une armature de sommet, elle-même coiffée radialement d'une bande de roulement, la bande de roulement étant réunie à deux bourrelets par l'intermédiaire de deux flancs. La couche d'éléments de renforcement de l'armature de carcasse est ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets. Le retournement de la couche d'armature de carcasse est séparé de la partie principale de la couche d'armature de carcasse par une première couche de mélange caoutchouteux s'étendant radialement depuis la tringle jusqu'au-delà de l'extrémité du retournement de la couche d'armature de carcasse et le retournement de la couche d'armature de carcasse s'étend axialement vers l'extérieur au contact d'une deuxième couche de mélange caoutchouteux, elle-même au moins au contact d'une troisième couche de mélange caoutchouteux formant la surface extérieure du pneumatique dans la zone du bourrelet, la troisième couche de mélange caoutchouteux étant destinée notamment à venir au contact de la jante. La troisième couche de mélange caoutchouteux est radialement vers l'extérieur au contact d'une quatrième couche de mélange caoutchouteux formant la surface extérieure d'un flanc. Ce pneumatique est tel que, dans une coupe méridienne :
- la distance entre l'extrémité du retournement de la couche d'armature de carcasse et le point radialement le plus intérieur du cercle circonscrit à la tringle est de l'ordre de 30 % de la distance entre le point axialement le plus extérieur de la partie principale de la couche d'armature de carcasse et le point radialement le plus intérieur du cercle circonscrit à la tringle, et
- le module de communication radiofréquence est disposé dans le bourrelet à l'interface entre la première et la deuxième couche de mélange caoutchouteux et radialement entre l'extrémité du retournement de la nappe carcasse et l'extrémité radialement extérieure de la première couche de mélange caoutchouteux.

Ce document précise que cette position permet une transmission optimale des données enregistrées dans le module de communication radiofréquence en évitant notamment qu'une partie du module de communication ne s'étende dans le volume du bourrelet compris radialement entre l'extrémité du retournement et la tringle. Le document WO2018/011510 A1 décrit aussi une architecture de pneumatique de type poids lourd présentant une géométrie particulière de la première couche de mélange caoutchouteux. Les documents EP3196056 A1 et FR2936185 présentent des architectures de pneumatique spécifiques ou générales comprenant des modules de communication enfouis dans leur structure au niveau du bourrelet du pneumatique, les modules de communication sont ici des transpondeurs radiofréquences passifs où l'antenne radiofréquence est connectée mécaniquement à la partie électronique du transpondeur. Enfin le document WO2016/19457 A1 présente une étiquette RFID de technologie particulière (acronyme en anglais de Radio Fréquency Identification) qui est un exemple de module de communication apte à être intégré à un pneumatique.

### Description brève de l'invention

L'invention a pour objet un pneumatique selon la revendication 1 ainsi qu'une méthode de fabrication selon la revendication 13.

Dans ce pneumatique, dans une coupe méridienne :
- la distance entre l'extrémité du retournement de la couche d'armature de carcasse et le point A radialement le plus intérieur du cercle circonscrit à la tringle est comprise entre 45 et 90 % de la distance entre le point E axialement le plus extérieur de la partie principale de la couche d'armature de carcasse et le point A radialement le plus intérieur du cercle circonscrit à la tringle,
- le retournement de la couche d'armature de carcasse et la partie principale de la couche d'armature de carcasse sont les seules couches d'éléments de renforcement dont l'allongement à rupture est inférieur à 6 % présentes dans une zone du flanc constituant au moins 90 % de la zone comprise entre l'extrémité du retournement de la couche d'armature de carcasse et le point B radialement le plus extérieur de la tringle, et
- le module de communication radiofréquence est disposé dans le bourrelet à l'intérieur de la deuxième couche de mélange caoutchouteux.

Avantageusement, le transpondeur du module de communication radiofréquence est disposé à une distance supérieure à 2 mm des fils de renforts métalliques du retournement de l'armature de carcasse, et de préférence supérieure à 3 mm.

La demanderesse a constaté que cette position du module de communication radiofréquence est à une distance suffisante des fils de renfort métalliques pour permettre une communication radiofréquence plus satisfaisante avec un lecteur extérieur. En effet, l'écartement du module de communication radiofréquence de quelques millimètres donne une bien meilleure robustesse de lecture des données du module de communication avec un lecteur extérieur contrairement à une solution où le module de communication serait positionné directement sur le retournement de la couche d'armature de carcasse. Industriellement, cette robustesse est un avantage très sensible. Le positionnement dans la deuxième couche de mélange du module de communication préserve par ailleurs le module de communication des agressions potentielles provenant de l'extérieur. Bien entendu l'enfouissement du module de communication dans la seconde couche de mélange caoutchouteux peut être inférieur à 2 millimètres mais la communication radiofréquence est alors moins bonne en raison de la proximité du retournement de la couche d'armature de carcasse si ceux-ci sont métalliques. De plus, ce positionnement assure aussi l'éloignement suffisant du module de communication par rapport à l'extrémité du retournement de la couche d'armature de carcasse qui constitue une singularité de rigidité au sein de l'architecture du pneumatique. Cet éloignement est bénéfique à l'endurance du pneumatique.

Cette position a aussi l'avantage d'être très favorable pour la mise en place du module de communication lors de la fabrication du pneumatique. En effet, il est alors envisageable de poser l'ensemble constitué de la deuxième, de la troisième et de la quatrième couches de mélange caoutchouteux lors de la fabrication de l'ébauche du pneumatique. Cela permet d'optimiser la productivité du procédé de fabrication de l'ébauche à cru d'un tel pneumatique équipé d'un module de communication en réduisant son temps de cycle de fabrication. Le module de communication est intégré dans la seconde couche de mélange caoutchouteux au travers d'une fente sur la surface de la seconde couche de mélange caoutchouteux soit avant la fabrication de l'ébauche du pneumatique soit pendant un temps de cycle de l'ébauche du pneumatique lorsque l'ensemble des trois couches de mélanges caoutchouteux est présenté sur le tambour de confection. L'ensemble des deuxième, troisième et quatrième couches de mélange caoutchouteux peut être obtenu par coextrusion et/ou par complexage des diverses couches.

Au sens de l'invention, une jante creuse (15° drop center) ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalent à 15°. Ces sièges sont par ailleurs prolongés par des crochets de jante de hauteur réduite par rapport à des crochets de jantes à bases plates dont les sièges de jante présentent des formes sensiblement cylindriques.

La position du point E axialement le plus extérieur de la partie principale de l'armature de carcasse est déterminée sur un pneumatique monté et gonflé selon les conditions nominales. Cette détermination peut être réalisée par exemple selon une technique de tomographie.

Les positions des points A radialement le plus intérieur et B radialement le plus extérieur du cercle circonscrit à la tringle peuvent également être déterminées selon une technique de tomographie ou bien sont déterminées sur une coupe d'un pneumatique, dont l'écartement des bourrelets est le même que lorsque le pneumatique est monté sur la jante de montage préconisée par l'ETRTO, celui-ci étant donc ni monté ni gonflé.

La distance entre le point axialement le plus extérieur de la partie principale de la couche d'armature de carcasse et le point A radialement le plus intérieur du cercle circonscrit à la tringle est mesurée sur un pneumatique monté et gonflé selon les conditions nominales. Cette mesure peut être réalisée par exemple selon une technique de tomographie.

Les autres distances, notamment mesurées depuis le point A radialement le plus intérieur du cercle circonscrit à la tringle, peuvent également être mesurées selon une technique de tomographie ou bien sont mesurées sur une coupe d'un pneumatique, dont l'écartement des bourrelets est le même que lorsque le pneumatique est monté sur la jante de montage préconisée par l'ETRTO, celui-ci étant donc ni monté ni gonflé.

On entend ici par l'expression « axialement vers l'extérieur » que cela se situe extérieurement au pneumatique par rapport à la partie principale de la couche d'armature de carcasse dans une direction parallèle à l'axe naturel de rotation du pneumatique.

Ici, la première couche de mélange caoutchouteux est un mélange de remplissage de l'espace délimité par la partie principale de la couche d'armature de carcasse et le retournement de la couche d'armature de carcasse nommée gomme de remplissage (en anglais « bead filler »).

La deuxième couche de mélange caoutchouteux est un élément tampon servant à assurer la géométrie du retournement de la couche d'armature de carcasse notamment au niveau des zones de couplage et de découplage entre la partie principale et le retournement de la couche d'armature de carcasse.

Enfin la troisième couche de mélange caoutchouteux est une gomme de protection assurant le contact du pneumatique avec la roue lors du montage.

Avantageusement, le retournement de la couche d'armature de carcasse et la partie principale de la couche d'armature de carcasse sont couplés radialement vers l'extérieur à partir d'un point C du retournement de la couche d'armature de carcasse situé à une distance comprise entre 30 et 55 %, de la distance entre l'extrémité du retournement de la couche d'armature de carcasse et le point A radialement le plus intérieur du cercle circonscrit à la tringle et le module de communication radiofréquence est disposé radialement extérieurement au-delà du point C.

Ce positionnement du module de communication radialement extérieur au point C permet d'éloigner le module de communication de la zone de flexion maximum du bourrelet qui se situe entre l'extrémité radialement supérieur de la tringle, le point B, et la zone de couplage délimité par le point C. Par conséquent, les sollicitations mécaniques subies par le module de communication sont moins fortes grâce à son positionnement radial au-delà du point C. De plus, la première couche de mélange caoutchouteux est profilée pour assurer le couplage et le découplage entre le retournement de la couche d'armature de carcasse et la partie principale de la couche d'armature de carcasse. De ce fait, le retournement de la couche d'armature de carcasse, qui est de faible épaisseur par nature, suit ce profilé permettant de positionner radialement le module de communication par rapport aux points singuliers de ce profilé de façon aisée. Ainsi, on améliore la précision de pose du module de communication sur le retournement de la couche d'armature de carcasse par la proximité de points de référence que constituent les points singuliers du profil de la première couche de mélange caoutchouteux. Il est donc aisé de repérer le point C pour positionner le module de communication radialement extérieurement à celui-ci lors de la réalisation de l'ébauche à cru du pneumatique.

Selon un mode de réalisation préférentiel, radialement vers l'extérieur à partir du point C du retournement de la couche d'armature de carcasse, le retournement de la couche d'armature de carcasse et la partie principale de la couche d'armature de carcasse sont couplés sur une longueur comprise entre 15 et 65 % de la distance entre l'extrémité du retournement de la couche d'armature de carcasse et le point A radialement le plus intérieur du cercle circonscrit à la tringle, pour être ensuite découplés par la première couche de mélange caoutchouteux jusqu'à l'extrémité du retournement de la couche d'armature de carcasse et le module de communication radiofréquence est disposé radialement en regard de cette zone de couplage et le module de communication radiofréquence est disposé radialement en regard de cette zone de couplage entre le retournement et la partie principale de l'armature de carcasse.

Ce positionnement du module de communication est idéal en éloignant le module de communication à la fois de la zone de flexion maximum du bourrelet et de l'extrémité du retournement de la couche d'armature de carcasse. Ainsi, la présence du module de communication est sans effet sur l'endurance du pneumatique mais on préserve également l'intégrité physique du module de communications tout en assurant une bonne performance de radiocommunication. Enfin, il est particulièrement aisé de repérer cette zone de couplage lors de la réalisation de l'ébauche à cru du pneumatique pour positionner le module de communication.

Selon un mode de réalisation préférentiel, la longueur de découplage est comprise entre 5 et 40 % de la distance entre l'extrémité du retournement de la couche d'armature de carcasse et le point A radialement le plus intérieur du cercle circonscrit à la tringle et de préférence comprise entre 15 et 35 % de ladite distance entre l'extrémité du retournement de la couche d'armature de carcasse et le point A radialement le plus intérieur du cercle circonscrit à la tringle.

De préférence selon l'invention, le retournement de la couche d'armature de carcasse et la partie principale de la couche d'armature de carcasse sont couplés sur une longueur comprise entre 25 et 40 % de la distance entre l'extrémité du retournement de la couche d'armature de carcasse et le point A radialement le plus intérieur du cercle circonscrit à la tringle.

Au sens de l'invention, la partie principale de la couche d'armature de carcasse et le retournement de la couche d'armature de carcasse sont dits couplés si les éléments de renforcement respectifs de la partie principale de la couche d'armature de carcasse et du retournement de la couche d'armature de carcasse sont séparés par une épaisseur de mélange caoutchouteux sensiblement constante et d'au plus 5 mm sur une longueur supérieure à 15 % de la distance entre l'extrémité du retournement de la couche d'armature de carcasse et le point A radialement le plus intérieur du cercle circonscrit à la tringle. L'épaisseur de mélange caoutchouteux séparant les éléments de renforcement respectifs de la partie principale de la couche d'armature de carcasse et du retournement de la couche d'armature de carcasse est mesurée selon la direction normale aux éléments de renforcement de la partie principale de la couche d'armature de carcasse. Avantageusement selon l'invention, les éléments de renforcement respectifs de la partie principale de la couche d'armature de carcasse et du retournement de la couche d'armature de carcasse sont séparés par une épaisseur de mélange caoutchouteux sensiblement constante d'au plus 3.5 mm et de préférence ils sont séparés par une épaisseur de mélange caoutchouteux sensiblement constante d'au moins 0.8 mm et de préférence encore par une épaisseur de mélange caoutchouteux sensiblement constante d'au moins 2.5 mm.

Au sens de l'invention, une épaisseur de mélange caoutchouteux sensiblement constante séparant les éléments de renforcement respectifs de la partie principale de la couche d'armature de carcasse et du retournement de la couche d'armature de carcasse est une épaisseur qui ne varie pas de plus de 0.5 mm. Les variations d'épaisseur ne sont alors dues qu'aux phénomènes de fluage lors de la fabrication et de la cuisson du pneumatique.

Au sens de l'invention, la première couche de mélange caoutchouteux peut être constituée de plusieurs mélanges caoutchouteux dont les propriétés de rigidité et plus spécifiquement dont les modules d'élasticité sous tension à 10 % d'allongement peuvent varier. Dans le cas de plusieurs mélanges caoutchouteux constituant la première couche, ils forment avantageusement un gradient de rigidité décroissant depuis la tringle vers l'extrémité radialement extérieure de ladite première couche.

Selon un mode de réalisation préféré de l'invention, l'armature de sommet comportant au moins une couche d'éléments de renforcement, le ratio de la distance radiale entre le point axialement le plus extérieur de la partie principale de la couche d'armature de carcasse et le point radialement le plus extérieur de la jante nominale, c'est-à-dire le point radialement le plus extérieur du crochet de jante, sur la distance radiale entre l'extrémité axialement extérieure de la couche d'éléments de renforcement de l'armature sommet axialement la plus large et le point radialement le plus extérieur de la jante nominale est inférieur ou égal à 55 %.

La distance radiale entre le point axialement le plus extérieur de la partie principale de la couche d'armature de carcasse et le point radialement le plus extérieur de la jante nominale est mesurée sur un pneumatique monté et gonflé selon les conditions nominales. Cette mesure peut être réalisée par exemple selon une technique de tomographie.

La distance radiale entre l'extrémité axialement extérieure de la couche d'éléments de renforcement de l'armature sommet axialement la plus large et le point radialement le plus extérieur de la jante nominale peut également être mesurée selon une technique de tomographie, le pneumatique étant monté et gonflé selon les conditions nominales.

De préférence encore selon l'invention, le ratio de la distance radiale entre le point E axialement le plus extérieur de la partie principale de la couche d'armature de carcasse et le point radialement le plus extérieur de la jante nominale sur la distance radiale entre l'extrémité axialement extérieure de la couche d'éléments de renforcement de l'armature sommet axialement la plus large et le point radialement le plus extérieur de la jante nominale est inférieur à 53 %.

Les essais ont montré que les pneumatiques ainsi réalisés selon l'invention et dont la masse est inférieure à celle de pneumatiques de conception plus usuelle, comportant par exemple des couches d'éléments de renforcement supplémentaires de type raidisseurs, présentent des performances en termes d'endurance, et notamment en termes d'endurance des zones des bourrelets, au moins aussi bonnes que celles desdits pneumatiques de conception plus usuelle, voire supérieures.

Avantageusement selon l'invention, l'extrémité radialement intérieure de la deuxième couche de mélange caoutchouteux est radialement comprise entre le point radialement le plus extérieur du cercle circonscrit à la tringle et le point radialement le plus intérieur du cercle circonscrit à la tringle. Ce positionnement est déterminé sur une coupe d'un pneumatique, dont l'écartement des bourrelets est le même que lorsque le pneumatique est monté sur la jante de montage préconisée par l'ETRTO, celui-ci étant donc ni monté ni gonflé.

Selon un mode de réalisation préféré de l'invention, le module d'élasticité sous tension à 10 % d'allongement des couches de calandrage de la couche d'armature de carcasse est compris entre 4 et 16 MPa et de préférence entre 8 et 12 MPa. Ces valeurs permettent notamment de définir le compromis souhaité entre les performances d'endurance du pneumatique et ses performances en termes de résistance au roulement.

De préférence selon l'invention, le module d'élasticité sous tension à 10 % d'allongement de la première couche de mélange caoutchouteux est inférieur ou égal au module d'élasticité sous tension à 10 % d'allongement du calandrage de la couche d'armature de carcasse. Ce choix permet notamment de concentrer les efforts de cisaillement au sein de la première couche de mélange caoutchouteux.

De préférence encore selon l'invention, le module d'élasticité sous tension à 10 % d'allongement de la première couche de mélange caoutchouteux est supérieur à 50 % du module d'élasticité sous tension à 10 % d'allongement du calandrage de la couche d'armature de carcasse et de préférence est supérieur à 70 % du module d'élasticité sous tension à 10 % d'allongement du calandrage de la couche d'armature de carcasse. Ce choix permet de maintenir les efforts de cisaillement au sein de la première couche de mélange caoutchouteux tout en assurant de bonnes performances d'endurance.

Avantageusement selon l'invention, le module d'élasticité sous tension à 10 % d'allongement de la deuxième couche de mélange caoutchouteux est inférieur à 150 % du module d'élasticité sous tension à 10 % d'allongement du calandrage de la couche d'armature de carcasse. Selon cette réalisation avantageuse de l'invention, la deuxième couche de mélange caoutchouteux confère suffisamment de rigidité pour assurer une bonne tenue en endurance du pneumatique lors des appuis sur les crochets de jante tout en assurant des performances en termes de résistance au roulement satisfaisantes.

Selon un mode de réalisation préféré de l'invention, pour favoriser le compromis entre les performances d'endurance et de résistance au roulement, le module d'élasticité sous tension à 10 % d'allongement de la première couche de mélange caoutchouteux est supérieur ou égal au module d'élasticité sous tension à 10 % d'allongement de la troisième couche de mélange caoutchouteux qui est lui-même supérieur ou égal au module d'élasticité sous tension à 10 % d'allongement de la quatrième couche de mélange caoutchouteux.

Au sens de l'invention, la partie principale de la couche d'armature de carcasse et le retournement de la couche d'armature de carcasse sont dits découplés si, radialement à l'extérieur de la zone de couplage, l'épaisseur de mélange caoutchouteux séparant les éléments de renforcement respectifs de la partie principale de la couche d'armature de carcasse et du retournement de la couche d'armature de carcasse est supérieure à celle de la zone de couplage. Les éléments de renforcement respectifs de la partie principale de la couche d'armature de carcasse et du retournement de la couche d'armature de carcasse sont alors avantageusement séparés par une épaisseur de mélange caoutchouteux comprise entre 3 et 8 mm, ladite épaisseur de mélange caoutchouteux étant mesurée selon la direction normale aux éléments de renforcement de la partie principale de la couche d'armature de carcasse entre les éléments de renforcement respectifs de la couche la partie principale de la couche d'armature de carcasse et du retournement de la couche d'armature de carcasse. De préférence selon l'invention, dans la zone de découplage, les éléments de renforcement respectifs de la partie principale de la couche d'armature de carcasse et du retournement de la couche d'armature de carcasse sont séparés d'au plus 6 mm et de préférence ils sont séparés d'au moins 4 mm.

Selon un mode de réalisation avantageux de l'invention, la zone de découplage peut être constituée d'une première partie, dite de transition, prolongeant la zone de couplage dans laquelle l'épaisseur de mélange caoutchouteux séparant les éléments de renforcement respectifs de la partie principale de la couche d'armature de carcasse et du retournement de la couche d'armature de carcasse augmente et d'une deuxième partie radialement la plus extérieure dans laquelle l'épaisseur de mélange caoutchouteux séparant les éléments de renforcement respectifs de la partie principale de la couche d'armature de carcasse et du retournement de la couche d'armature de carcasse est sensiblement constante.

Selon cette variante de réalisation de l'invention, l'augmentation de l'épaisseur de la première couche de mélange caoutchouteux permet de venir compenser la diminution de la tension dans les éléments de renforcement de l'armature de carcasse lorsque l'on s'approche de l'extrémité de son retournement pour absorber les contraintes de cisaillement entre la partie principale de la couche d'armature de carcasse et son retournement.

Avantageusement encore, la longueur de découplage est comprise entre 5 et 40 % de la distance entre l'extrémité du retournement de la couche d'armature de carcasse et le point radialement le plus intérieur du cercle circonscrit à la tringle et de préférence comprise entre 15 et 35 % de la distance entre l'extrémité du retournement de la couche d'armature de carcasse et le point radialement le plus intérieur du cercle circonscrit à la tringle.

Selon un mode préféré de réalisation de l'invention, dans tout plan méridien, sur une longueur du retournement de la couche d'armature de carcasse délimitée radialement entre l'extrémité dudit retournement de la couche d'armature de carcasse et un point situé à une distance du point radialement le plus intérieur du cercle circonscrit à la tringle égale à 65 % de la distance entre l'extrémité du retournement de la couche d'armature de carcasse et le point radialement le plus intérieur du cercle circonscrit à la tringle, tout point du retournement de la couche d'armature de carcasse est à une distance de la surface extérieure du pneumatique inférieure à 10 mm. De préférence encore, tout point du retournement de la couche d'armature de carcasse est à une distance de la surface extérieure du pneumatique inférieure à 10 mm sur une longueur du retournement de la couche d'armature de carcasse délimitée radialement entre l'extrémité dudit retournement et un point situé à une distance du point radialement le plus intérieur du cercle circonscrit à la tringle égale à 50 % de la distance entre l'extrémité du retournement de la couche d'armature de carcasse et le point radialement le plus intérieur du cercle circonscrit à la tringle.

Avantageusement encore selon l'invention, dans tout plan méridien, sur une distance radiale supérieure à 4 mm, et de préférence supérieure à 10 mm, démarrant radialement à l'extérieur de l'extrémité du retournement de la couche d'armature de carcasse et à une distance radiale de l'extrémité du retournement de la couche d'armature de carcasse égale à 2.5 fois le diamètre d'un élément de renforcement de l'armature de carcasse et s'étendant radialement vers l'extérieur, l'épaisseur, mesurée selon la direction normale aux éléments de renforcement du retournement de la couche d'armature de carcasse à l'extrémité du retournement de la couche d'armature de carcasse, de la quatrième couche de mélange caoutchouteux formant la surface extérieure d'un flanc est sensiblement constante.

Avantageusement encore selon l'invention, dans tout plan méridien, sur une distance radiale supérieure à 4 mm, et de préférence supérieure à 10 mm, démarrant radialement à l'intérieur de l'extrémité du retournement de la couche d'armature de carcasse et à une distance radiale de l'extrémité du retournement de la couche d'armature de carcasse égale à 2.5 fois le diamètre d'un élément de renforcement de l'armature de carcasse et s'étendant radialement vers l'intérieur, l'épaisseur, mesurée selon la direction normale aux éléments de renforcement du retournement de la couche d'armature de carcasse à l'extrémité du retournement de la couche d'armature de carcasse, de la quatrième couche de mélange caoutchouteux formant la surface extérieure d'un flanc est sensiblement constante.

Au sens de l'invention, l'expression une épaisseur sensiblement constante signifie qu'elle ne varie pas de plus de 0.5 mm. Ces variations d'épaisseur ne sont dues qu'aux phénomènes de fluage lors de la fabrication et de la cuisson du pneumatique.

La quatrième couche de mélange caoutchouteux ainsi réalisée selon l'invention semble permettre de contribuer au meilleur positionnement de la première couche de mélange caoutchouteux et à sa mise en place pour assurer le couplage et éventuellement le découplage de la partie principale de la couche d'armature de carcasse et du retournement de la couche d'armature de carcasse.

Selon un mode de réalisation avantageux de l'invention, dans tout plan méridien, dans chaque bourrelet, le pneumatique comporte une armature de contention entourant la tringle et un volume de mélange caoutchouteux directement au contact de la tringle.

Une telle armature de contention permet lors de l'utilisation du pneumatique de limiter les évolutions de forme de la tringle et ainsi de conserver des performances notamment en termes d'endurance satisfaisantes. En effet, le pneumatique selon l'invention dont la structure conduit à son allégement pourrait, dans certains cas d'utilisation ou types de roulage, conduire à une évolution géométrique dans la zone du bourrelet potentiellement nuisible aux performances en termes d'endurance du pneumatique. La présence d'une armature de contention telle que proposée permet de retarder voire de prévenir une telle évolution géométrique. Avantageusement encore selon l'invention, l'armature de contention est constituée d'une couche d'éléments de renforcement textiles de type polyamide aliphatique.

Avantageusement selon l'invention, les tringles sont des tringles paquets, c'est-à-dire des tringles formées d'un assemblage de fils gommés enroulés autour d'une forme, de préférence de forme hexagonale.

Selon un mode de réalisation de l'invention, notamment pour améliorer encore les performances en termes d'endurance du pneumatique, l'armature de carcasse est formée de câbles dont la structure est fortement pénétrée de mélanges caoutchouteux. Il peut par exemple s'agir de câbles dont la construction permet d'augmenter leur pénétrabilité par les mélanges caoutchouteux. Il peut encore s'agir de câbles dans lesquels des mélanges caoutchouteux sont insérés lors de la fabrication des câbles eux-mêmes. Il s'agit alors par exemple de câbles à au moins deux couches, au moins une couche interne étant gainée d'une couche constituée d'une composition de caoutchouc non réticulable, réticulable ou réticulée, de préférence à base d'au moins un élastomère diénique.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqués précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

De préférence, le module de communication est constitué du transpondeur radiofréquence encapsulé dans une masse de gomme d'enrobage isolante électriquement. À titre d'exemple, le transpondeur radiofréquence peut être pris en sandwich entre deux plaques de gomme d'enrobage isolante. Selon un autre mode de réalisation, le transpondeur radiofréquence est gainé d'une masse de gomme d'enrobage isolante électriquement et le semi-fini prêt à être placé dans le pneumatique a une géométrie avec un axe de symétrie de rotation.

Avantageusement, le module en extension de la masse de gomme d'enrobage est inférieur ou égal au module en extension des mélanges caoutchouteux adjacents. Cela limite les efforts aux interfaces entre le module de communication et les mélanges caoutchouteux adjacents.

De même, avantageusement la constante diélectrique relative de la masse de gomme d'enrobage est inférieure à la constante diélectrique relative des mélanges caoutchouteux adjacents, cela facilite la communication radiofréquence entre le module et un lecteur externe.

De préférence, le transpondeur comportant une puce électronique couplée à une antenne rayonnante définissant un premier axe longitudinal, ce premier axe longitudinal est orienté circonférentiellement.

Cette orientation est perpendiculaire aux fils de la nappe de carcasse et est très favorable pour la tenue mécanique du transpondeur ainsi que pour la qualité de lecture du transducteur.

Selon un premier mode de réalisation du module de communication, l'antenne rayonnante comportant deux tronçons d'antennes hélicoïdales, la puce électronique est connectée galvaniquement aux deux tronçons d'antennes hélicoïdales.

Selon un deuxième mode de réalisation du module de communication, le transpondeur radiofréquence du module de communication comprend en plus une antenne primaire connectée électriquement à la puce électronique, l'antenne primaire est couplée inductivement à l'antenne rayonnante, et l'antenne rayonnante est une antenne dipôle constituée d'un ressort hélicoïdal monobrin définissant le premier axe longitudinal.

L'antenne primaire peut être une bobine ayant au moins une spire définissant un deuxième axe longitudinal qui est circonscrite dans un cylindre dont l'axe de révolution est parallèle au deuxième axe longitudinal et dont le diamètre est compris entre le tiers et trois fois, de préférence entre la moitié et deux fois, le diamètre moyen du ressort hélicoïdal de l'antenne rayonnante.

Selon un mode de réalisation très préférentiel, l'antenne primaire est disposée à l'intérieur du ressort hélicoïdal monobrin de l'antenne rayonnante.

L'invention a aussi pour objet un procédé de fabrication d'un pneumatique comportant un module de communication radiofréquence, dans lequel :
- on fabrique une ébauche cylindrique comprenant une tringle annulaire intercalée entre une armature de carcasse annulaire et une première couche de mélange caoutchouteux,
- on replie, autour de la tringle une partie de l'armature de carcasse sur la première couche de mélange caoutchouteux pour former un retournement de l'armature de carcasse ; et
- on vient déposer sur le retournement un profilé d'une deuxième couche de mélange caoutchouteux qui comporte noyé à l'intérieur un module de communication.

Avantageusement, avant de déposer la deuxième couche de mélange caoutchouteux sur le retournement de l'armature de carcasse, on crée une fente à partir de la surface de la deuxième couche de mélange caoutchouteux et on introduit le module de communication à l'intérieur de la fente.

Selon un autre procédé d'assemblage du pneumatique :
- on dépose sur un tambour cylindrique une gomme intérieure ;
- on dépose successivement ou en un complexe les profilés des deuxième, troisième et quatrième couches de mélange caoutchouteux ;
- on met en place les deux tringles et les deux profilés de la première couche de mélange caoutchouteux ;
- on conforme la carcasse pour la plaquer sur la surface intérieure des deux tringles et profilés de la première couche ;
- on replie autour de la tringle et on rabat sur la première couche de mélange caoutchouteux les deuxième, troisième et quatrième couches de mélanges caoutchouteux ;
- on achève la fabrication de l'ébauche de pneumatique puis on vulcanise cette ébauche pour donner un pneumatique ;
dans lequel, avant de replier autour de la tringle les deuxième, troisième et quatrième couches de mélanges caoutchouteux, on crée une fente à partir de la surface du profilé de la deuxième couche de mélange caoutchouteux et on introduit le module de communication à l'intérieur de la fente.

La fente à la surface de la deuxième couche de mélange caoutchouteux peut être réalisée avant la mise en place du profilé sur l'ébauche de pneumatique ou pendant cet assemblage de l'ébauche de pneumatique.

### Description des Figures

Les différents objets de l'invention seront mieux compris au moyen de la description détaillée qui suit, conjointement avec les figures annexés sur lesquelles les mêmes numéros de référence désignent partout des parties identiques, et dans lesquelles :
- la figure 1 illustre une vue méridienne d'un schéma d'un pneumatique selon un mode de réalisation de l'invention ;
- la figure 2, présente une représentation schématique agrandie de la zone du bourrelet du pneumatique de la figure 1 ;
- la figure 3 présente un transpondeur radiofréquence usuel ;
- la figure 4 présente une vue éclatée schématique d'un module de communication ;
- la figure 5 présente une vue en perspective d'un transpondeur radiofréquence selon un mode de réalisation de l'invention dans une configuration où la partie électronique est située à l'intérieur de l'antenne rayonnante ;
- la figure 6 présente une vue en perspective d'un transpondeur radiofréquence selon l'invention dans une configuration où la partie électronique est située à l'extérieur de l'antenne rayonnante ;
- la figure 7 présente une vue en perspective de la partie électronique d'un transpondeur radiofréquence dans une configuration où la partie électronique est située à l'intérieur de l'antenne rayonnante ; et
- la figure 8 présente un profilé de mélanges caoutchouteux destiné à être appliqué sur une ébauche de pneumatique.

Les figures ne sont pas représentées à l'échelle pour en simplifier la compréhension.

### Description détaillée de l'invention

Dans ce qui suit, les termes « gomme caoutchouteuse », « mélange caoutchouteux », « gomme » et « mélange » sont utilisés de façon équivalente pour identifier des constituants caoutchouteux du pneumatique.

Des câbles sont dits inextensibles lorsque lesdits câbles présentent sous une force de traction égale à 10 % de la force de rupture un allongement relatif au plus égal à 0,2 %.

Des câbles sont dits élastiques lorsque lesdits câbles présentent sous une force de traction égale à la charge de rupture un allongement relatif au moins égal à 3 % avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10 % d'allongement (conditions normales de température et d'hygrométrie selon la norme AFNOR-NFT-40101 de décembre 1979).

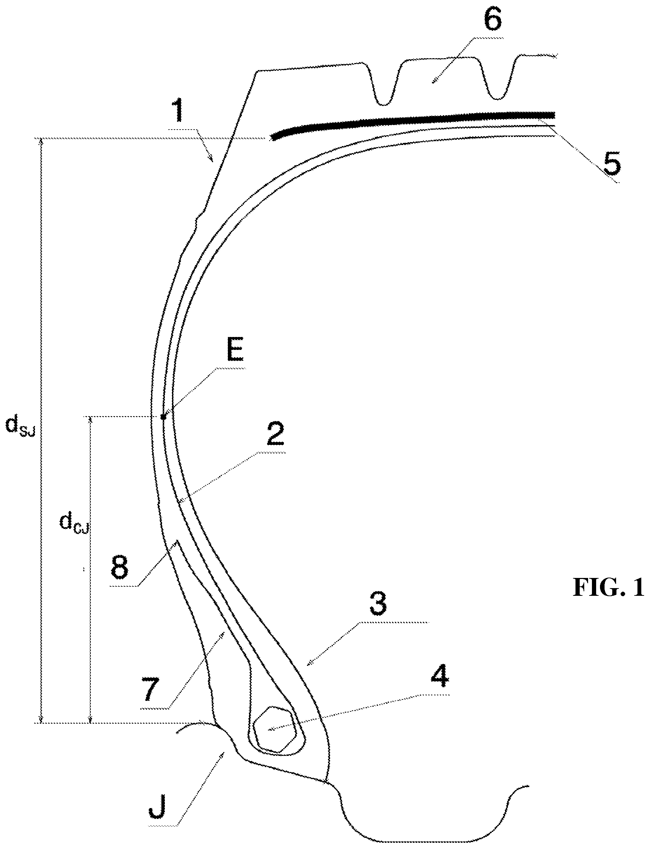

La figure 1 ne représente qu'une demi-vue d'un pneumatique qui se prolonge de manière symétrique par rapport au plan médian circonférentiel, ou plan équatorial, d'un pneumatique.

Sur la figure 1, le pneumatique 1 est de dimension 12 R 22.5. Le pneumatique 1 comprend une armature de carcasse radiale 2 ancrée dans deux bourrelets 3. L'armature de carcasse 2 est frettée au sommet du pneumatique par une armature de sommet 5, elle-même coiffée d'une bande de roulement 6.

L'armature de carcasse 2, formée d'une seule couche de câbles métalliques, est enroulée dans chacun des bourrelets 3 autour d'une tringle 4 et forme dans chacun des bourrelets 3 un retournement de la couche d'armature de carcasse 7 présentant une extrémité 8.

L'armature de carcasse 2 est constituée d'éléments de renforcements entre deux couches de calandrage dont le module d'élasticité sous tension à 10 % d'allongement est égal à 9.8 MPa.

Les éléments de renforcements de l'armature de carcasse 2 sont des câbles 19.18 dont l'allongement à rupture est égal à 2.5 %.

Les câbles d'armature de carcasse du pneumatique 1 sont des câbles métalliques à couches de structure 1+6+12, non frettés, constitués d'un noyau central formé d'un fil, d'une couche intermédiaire formée de six fils et d'une couche externe formée de douze fils.

La figure 1 illustre le pneumatique monté sur sa jante nominale J ; le point E axialement le plus extérieur de la partie principale de la couche d'armature de carcasse 2 est ainsi déterminé le pneumatique étant gonflé à sa pression nominale, par exemple par tomographie.

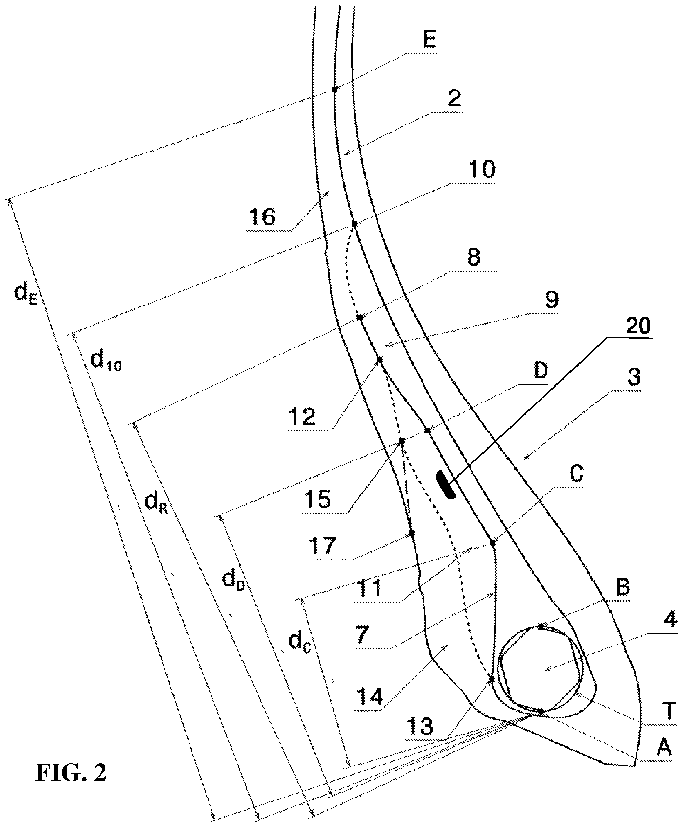

La figure 2 illustre de manière agrandie une représentation schématique en coupe d'un bourrelet 3 du pneumatique dans lequel on retrouve une partie de la couche d'armature de carcasse 2 enroulée autour d'une tringle 4 pour former un retournement 7 avec une extrémité 8.

Sur cette figure 2, est matérialisé le cercle T circonscrit à la tringle 4 et apparaît le point A radialement le plus intérieur dudit cercle T. Ce point A est défini sur une coupe radiale du pneumatique, dont l'écartement des bourrelets est le même que lorsque le pneumatique est monté sur la jante de montage préconisée par l'ETRTO, celui-ci n'étant pas monté sur une jante.

On détermine également le point B radialement le plus extérieur du cercle T.

La distance de entre le point E et le point A est égale à 128 mm.

La distance d_{R} entre le point 8 et le point A est égale à 90 mm.

Le ratio de la distance d_{R} sur la distance de est égal à 70 % et donc compris entre 45 et 90 %.

La distance radiale d_{CJ} entre le point E axialement le plus extérieur de la partie principale de la couche d'armature de carcasse et le point radialement le plus extérieur de la jante nominale est égale à 108.2 mm.

La distance radiale d_{SJ} entre l'extrémité axialement extérieure de la couche d'éléments de renforcement de l'armature sommet axialement la plus large et le point radialement le plus extérieur de la jante nominale est égale à 206.7 mm.

Le ratio de la distance d_{CJ} sur la distance d_{SJ} est égal à 52,3 % et donc inférieur à 53 %.

Le retournement 7 de la couche d'armature de carcasse vient se coupler à la partie principale de la couche d'armature de carcasse 2 à partir du point C, tel que la distance de entre le point C et le point A est égale à 37 mm.

Le ratio de la distance de sur la distance d_{R} est égal à 41 % et donc compris entre 30 et 55 %.

Le retournement 7 de la couche d'armature de carcasse est ensuite découplé de la partie principale de la couche d'armature de carcasse 2 à partir du point D, tel que la distance d_{D} entre le point D et le point A est égale à 66 mm et telle que la longueur de couplage entre le point C et le point D est égale à 29 mm et donc comprise entre 25 et 40 % de la distance d_{R}. La longueur de couplage est mesurée selon la droite passant par les points C et D.

L'épaisseur de couplage entre la partie principale de la couche d'armature de carcasse 2 et le retournement 7 de la couche d'armature de carcasse, mesurée selon la direction normale aux éléments de renforcement de la partie principale de la couche d'armature de carcasse 2 entre les éléments de renforcement respectifs de la partie principale de la couche d'armature de carcasse et du retournement de la couche d'armature de carcasse 2, est sensiblement constante et égale à 2.9 mm.

La longueur de découplage entre le point D et le point 8 est égale à 21 mm et donc comprise entre 15 et 35 % de la distance d_{R}. La longueur de découplage est mesurée selon la droite passant par les points D et 8.

Le retournement 7 de la couche d'armature de carcasse 2 est séparé de la partie principale de la couche d'armature de carcasse 2 par une première couche de mélange caoutchouteux 9, présentant une extrémité radialement extérieure 10 à une distance d₁₀ du point A égale à 117 mm. La première couche de mélange caoutchouteux 9 présente un module d'élasticité sous tension à 10 % d'allongement égal à 7.8 MPa et donc inférieur au module d'élasticité sous tension à 10 % d'allongement des couches de calandrage de l'armature de carcasse 2.

La première couche de mélange caoutchouteux 9 est profilée pour venir en appui sur la tringle 4 et assurer le couplage et découplage entre le retournement de la couche d'armature de carcasse 7 et la partie principale de la couche d'armature de carcasse 2.

Axialement à l'extérieur du retournement 7 de la couche d'armature de carcasse est représentée la deuxième couche de mélange caoutchouteux 11 dont l'extrémité radialement extérieure 12 est radialement à l'intérieur de l'extrémité 8 du retournement 7 de la couche d'armature de carcasse. Selon un autre mode de réalisation non représenté, l'extrémité radialement extérieure de la deuxième couche de mélange caoutchouteux est radialement extérieure à l'extrémité 8 du retournement 7 de la couche d'armature de carcasse.

L'extrémité radialement intérieure 13 de la deuxième couche de mélange caoutchouteux 11 est radialement comprise entre les points A et B, respectivement radialement le plus intérieur et radialement le plus extérieur du cercle circonscrit à la tringle.

La deuxième couche de mélange caoutchouteux 11 présente un module d'élasticité sous tension à 10 % d'allongement égal à 12.5 MPa et donc supérieur au module d'élasticité sous tension à 10 % d'allongement des couches de calandrage de l'armature de carcasse 2.

Au contact de la deuxième couche de mélange caoutchouteux 11 et radialement sous la tringle, on trouve la troisième couche de mélange caoutchouteux 14, dont l'extrémité axialement la plus extérieure 15 est radialement à l'intérieur de l'extrémité 12 de la deuxième couche de mélange caoutchouteux 11.

La troisième couche de mélange caoutchouteux 14 présente un module d'élasticité sous tension à 10 % d'allongement égal à 7.1 MPa.

Axialement au contact de la première couche de mélange caoutchouteux 9, de la deuxième couche de mélange caoutchouteux 11, et de la troisième couche de mélange caoutchouteux 14, se trouve la quatrième couche de mélange caoutchouteux 16. L'extrémité 17 radialement intérieure de la quatrième couche de mélange caoutchouteux 16 est radialement intérieure à l'extrémité 15 de la troisième couche de mélange caoutchouteux 14.

La quatrième couche de mélange caoutchouteux 16 présente un module d'élasticité sous tension à 10 % d'allongement égal à 3.1 MPa.

Dans des zones situées de part et d'autre de l'extrémité 8 du retournement 7 de la couche d'armature de carcasse, le profil de la quatrième couche de mélange caoutchouteux 16 est tel que ladite quatrième couche de mélange caoutchouteux 16 présente une épaisseur, mesurée selon la direction normale aux éléments de renforcement de l'armature de carcasse 2 à l'extrémité 8 du retournement 7, sensiblement constante et égale à 3.3 mm, sur deux longueurs radiales d'environ 5 mm à partir de chacun des deux points situés de part et d'autre de l'extrémité 8 à des distances de la dite extrémité 8 égales à 2.5 mm correspondant à plus de 2.5 fois le diamètre des câbles d'armature de carcasse, celui-ci étant égal à 0.9 mm.

Le bourrelet 3 comporte aussi un module de communication radiofréquence 20 disposé axialement extérieurement relativement à l'interface entre le retournement de l'armature de carcasse 7 et la deuxième couche de mélange caoutchouteux 11. Ce module de communication 20 est placé radialement au niveau de la zone de couplage entre la partie principale 2 de l'armature de carcasse et le retournement 7 de cette armature de carcasse, c'est-à-dire entre les deux points C et D de la figure 2. Le module de communication 20 est de préférence disposé sensiblement au milieu de la zone de couplage, entre C et D. Le module de communication 20 est noyé à l'intérieur de la deuxième couche de mélange caoutchouteux à une distance supérieure à 2 mm et de préférence supérieure à 3 mm de l'interface. Comme indiqué sur la figure 2, le module de communication est placé dans le pneumatique de sorte que son antenne radiofréquence de type dipôle soit positionnée circonférentiellement. Ainsi, l'antenne radiofréquence est perpendiculaire aux éléments de renforcement de la couche d'armature de carcasse de type radiale. Ainsi, l'antenne radiofréquence repose indirectement alors sur un grand nombre d'éléments de renforts ce qui améliore sa stabilité mécanique. De plus, malgré que les éléments de renforcement puissent être métalliques, la perpendicularité relative de l'orientation de l'antenne radiofréquence par rapport aux éléments de renforts métalliques perturbe à minima le fonctionnement radiofréquence de l'antenne.

Cette position protège bien mécaniquement le transpondeur radiofréquence du module de communication et la demanderesse a constaté expérimentalement que la distance d'au moins 2 mm des fils métalliques du retournement 7 de l'armature de carcasse 2 permet une bonne robustesse de communication avec un lecteur extérieur même si les distances de lecture sont pratiquement identiques ou très proches. La distance de lecture est ainsi moins soumise aux aléas de la fabrication industrielle que lorsque le module de communication est placé directement à l'interface entre la deuxième couche de communication et le calandrage de la couche de renforts métalliques du retournement.

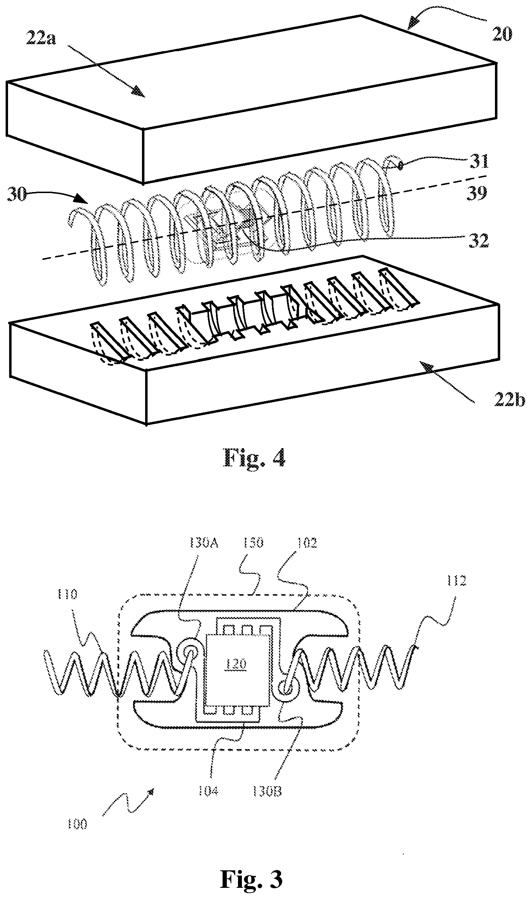

La figure 4 présente un éclaté d'un module de communication 20. Ce module 20 comprend un transpondeur radiofréquence 30 noyé entre deux couches 22a et 22b d'un mélange caoutchouteux isolant électriquement non-vulcanisé. L'épaisseur de chaque couche est de l'ordre de 1 mm, la longueur de l'ordre de 50 à 70 mm et sa largeur de l'ordre de 10 à 20 mm. Un tel module de communication est un produit semi-fini apte à être intégré dans la structure du pneumatique 1 lors de la fabrication de celui-ci.

Selon un autre mode de réalisation de l'objet de l'invention, le mélange caoutchouteux constituant la deuxième couche de mélange est un mélange isolant électriquement. Dans ce mode de réalisation, il est inutile de mettre dans la fente réalisée à la surface de la deuxième couche de mélange le semi-fini précédemment décrit, il suffit de placer le transpondeur radiofréquence passif.

Le mélange caoutchouteux 22 d'enrobage du transpondeur radiofréquence 30, ou selon le cas le mélange de la deuxième couche 11, contient 100 pce (parties pour 100 parties d'élastomère en masse) de polymère tel qu'EPDM (ethylene propylene diene monomer rubber), caoutchouc butyle, néoprène ou d'élastomère diénique tel que SBR (styrene-butadiene rubber), polybutadiène, caoutchouc naturel, ou polyisoprène.

Le mélange peut contenir des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade inférieur ou égal à 500, à un taux maximum de 20 pce.
- il est possible d'ajouter ou de remplacer ces charges par de la craie ou du kaolin.

De tels taux et types de charges permettent de garantir une permittivité relative inférieure à 6.5, notamment à une fréquence de 915 MHz.

La rigidité à cuit du mélange d'enrobage est de préférence inférieure ou proche de celles des mélanges caoutchouteux adjacents.

Dans un premier mode de réalisation, le transpondeur radiofréquence du module de communication 20 est un transpondeur radiofréquence usuel, tel que présenté à la figure 3 et décrit dans le document WO 2012/030321 A1. Ce transpondeur 100 comprend une puce électronique 120 fixée sur un support ou PCB (printed circuit board) 102 et galvaniquement connectée via les pistes conductrices 104 et les soudures 130 à deux demi-antennes 110 et 112. Les antennes sont des ressorts hélicoïdaux à âme en fil d'acier. La partie électronique et au moins une partie des antennes sont noyées dans un mélange caoutchouteux isolant 150. Les antennes définissent un axe de symétrie 39.

Le transpondeur radiofréquence 30 du module de communication 20 tel que présenté à la figure 4 correspond à un deuxième mode de réalisation du module de communication 20 qui va être décrit maintenant.

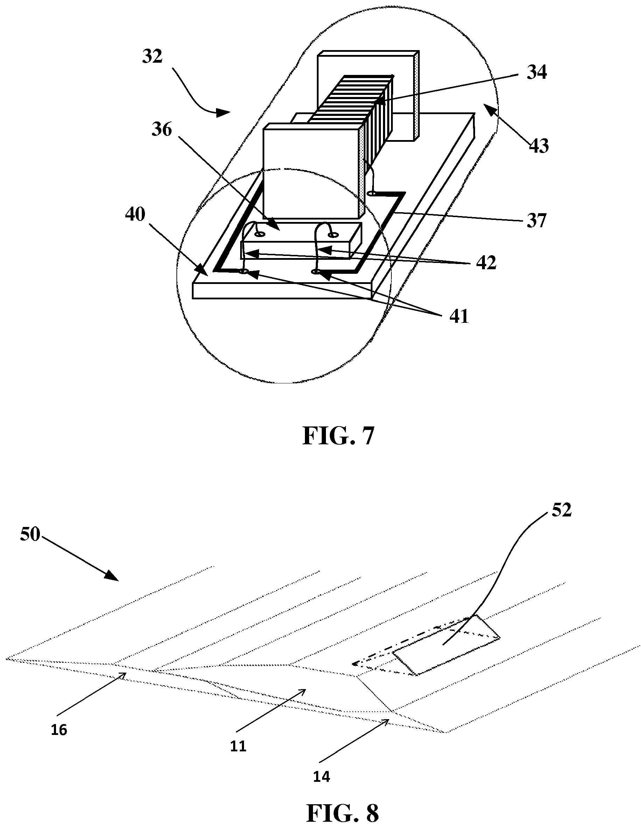

Le transpondeur radiofréquence 30 selon ce deuxième mode de réalisation du module de communication 20 comprend une partie électronique 32 et une antenne rayonnante 31 apte à communiquer avec un lecteur radiofréquence externe. Il comprend en plus (voir figure 7) une antenne primaire 34 connectée électriquement à la puce électronique 36 et couplée inductivement à l'antenne rayonnante 31. L'antenne rayonnante est une antenne dipôle constituée d'un ressort hélicoïdal monobrin définissant un premier axe longitudinal.

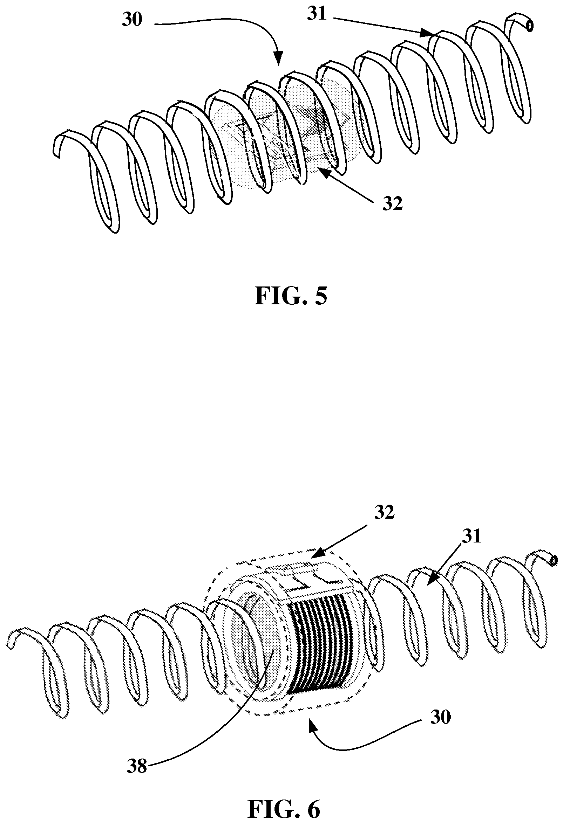

La figure 5 présente un transpondeur radiofréquence 30 dans une configuration où la partie électronique 32 est située à l'intérieur de l'antenne rayonnante 31. La forme géométrique de la partie électronique 32 est circonscrite dans un cylindre dont le diamètre est inférieur ou égal au diamètre intérieur du ressort hélicoïdal. L'enfilement de la partie électronique 32 dans l'antenne rayonnante 31 s'en trouve facilité. Le plan médian de l'antenne primaire se trouve dans la zone centrale de l'antenne rayonnante et sensiblement superposé au plan médian de l'antenne rayonnante.

La figure 6 présente un transpondeur radiofréquence 30 dans une configuration où la partie électronique 32 se trouve à l'extérieur de l'antenne rayonnante 31. La forme géométrique de la partie électronique 32 présente une cavité cylindrique 38 dont le diamètre est supérieur ou égal au diamètre extérieur de l'antenne rayonnante 31. L'enfilement de l'antenne rayonnante 31 dans la cavité cylindrique 38 de la partie électronique s'en trouve ainsi facilité. Le plan médian de l'antenne primaire se trouve dans la zone centrale de l'antenne rayonnante et sensiblement dans le plan médian de l'antenne rayonnante 31.

La figure 7 présente la partie électronique 32 d'un transpondeur radiofréquence 30 destiné à une configuration où la partie électronique 32 est située à l'intérieur de l'antenne rayonnante 31. La partie électronique 32 comprend une puce électronique 36 et une antenne primaire 34 connectée électriquement à la puce électronique 36 par l'intermédiaire d'un circuit imprimé 40. L'antenne primaire est ici constituée par une micro bobine CMS (acronyme de Composant Monté en Surface). La connexion électrique entre les composants sur le circuit imprimé est réalisée à l'aide de pistes en cuivre 37 terminées par des pastilles 41 en cuivre. La connexion électrique des composants sur le circuit imprimé est réalisée à l'aide de la technique dite du « wire bonding » par des fils 42 en or entre le composant et les pastilles 41. L'ensemble constitué du circuit imprimé 40, de la puce électronique 36 et de l'antenne primaire 34 est noyé dans une masse rigide 43 en résine époxy haute température isolante électriquement constituant la partie électronique 32 du transpondeur radiofréquence 30.

Ce transpondeur radiofréquence 30 a l'avantage d'être beaucoup plus résistant mécaniquement que les transpondeurs usuels.

Selon un premier procédé d'assemblage d'une ébauche de pneumatique comportant un module de communication radiofréquence 20 :
- on fabrique une ébauche cylindrique comprenant une tringle annulaire intercalée entre une armature de carcasse annulaire et une première couche de mélange caoutchouteux,
- on replie, autour de la tringle une partie de l'armature de carcasse sur la première couche de mélange caoutchouteux pour former un retournement de l'armature de carcasse ; et
- on vient déposer sur le retournement une deuxième couche de mélange caoutchouteux qui comporte noyé à l'intérieur un module de communication.

Avantageusement, avant de déposer la deuxième couche de mélange caoutchouteux sur le retournement de l'armature de carcasse, on crée une fente à partir de la surface de la deuxième couche de mélange caoutchouteux et on introduit le module de communication ou le transpondeur radiofréquence selon le cas, à l'intérieur de la fente.

Comme l'illustre la figure 8, on peut utiliser lors de la confection d'un pneumatique un profilé complexe 50, il est alors très aisé, avant la mise en place de ce complexe de réaliser au moyen par exemple d'un dispositif de coupe à ultra-sons une fente de dimensions et d'orientation adaptées pour la mise en place rapide et reproductible du transpondeur radiofréquence et de ses gommes d'enrobage s'il y a lieu.

Ce profilé 50 comporte sur la surface libre du deuxième mélange caoutchouteux 11, destinée à venir en appui sur le retournement de l'armature de carcasse une fente 52 de dimensions appropriées pour accueillir un module de communication tel que présenté à la figure 4. La fente est aussi réalisée de telle sorte que l'axe de symétrie défini par l'antenne rayonnante du transpondeur radiofréquence passif du module de communication soit orienté circonférentiellement.

Selon un autre procédé d'assemblage du pneumatique :
- on dépose sur un tambour cylindrique une gomme intérieure ;
- on dépose successivement ou en un complexe les profilés des deuxième, troisième et quatrième couches de mélange caoutchouteux ;
- on met en place les deux tringles et les deux profilés de la première couche de mélange caoutchouteux ;
- on conforme la carcasse pour la plaquer sur la surface intérieure des deux tringles et profilés de la première couche ;
- on replie autour de la tringle et on rabat sur la première couche de mélange caoutchouteux les deuxième, troisième et quatrième couches de mélanges caoutchouteux ; et
- on achève la fabrication de l'ébauche de pneumatique puis on vulcanise cette ébauche pour donner un pneumatique.

Ce procédé est tel que, avant de replier autour de la tringle les deuxième, troisième et quatrième couches de mélanges caoutchouteux, on crée une fente à partir de la surface du profilé de la deuxième couche de mélange caoutchouteux et on introduit le module de communication à l'intérieur de la fente.

Dans les deux procédés d'assemblage précédents d'une ébauche de pneumatique, la fente à la surface de la deuxième couche de mélange caoutchouteux peut être réalisée avant la mise en place du profilé sur l'ébauche de pneumatique ou pendant cet assemblage de l'ébauche de pneumatique.

Il est avantageux d'utiliser un semi-fini à symétrie cylindrique pour insérer dans la fente le module de communication en raison de la plus grande facilité de manipulation et de mise en place : le seul impératif est de bien orienter l'axe de symétrie du semi-fini.

Un tel semi-fini avec un axe de symétrie de rotation est particulièrement avantageux dans le cas d'un transpondeur tel que présenté aux figures 5 et 6.

## Revendications

1. Pneumatique (1), destiné à être monté sur une jante creuse « 15° drop centre » (J), comprenant une armature de carcasse radiale, constituée d'une unique couche d'armature de carcasse formée d'éléments de renforcement insérés entre deux couches de calandrage de mélange caoutchouteux, ledit pneumatique (1) comprenant une armature de sommet (5), elle-même coiffée radialement d'une bande de roulement (6), ladite bande de roulement (6) étant réunie à deux bourrelets (3) par l'intermédiaire de deux flancs, la couche d'éléments de renforcement de l'armature de carcasse (2) étant ancrée dans chacun des bourrelets (3) par retournement autour d'une tringle (4) pour former une partie principale de la couche d'armature de carcasse (2) s'étendant d'une tringle (4) à l'autre et un retournement de la couche d'armature de carcasse (7) dans chacun des bourrelets (3), ledit retournement de la couche d'armature de carcasse (7) étant séparé de la partie principale de la couche d'armature de carcasse (2) par une première couche de mélange caoutchouteux (9) s'étendant radialement depuis la tringle (4) jusqu'au-delà de l'extrémité (8) du retournement de la couche d'armature de carcasse (7) et ledit retournement de la couche d'armature de carcasse (7) étant axialement vers l'extérieur au contact d'une deuxième couche de mélange caoutchouteux (11), elle-même au moins au contact d'une troisième couche de mélange caoutchouteux (14) formant la surface extérieur du pneumatique dans la zone du bourrelet (3), ladite troisième couche de mélange caoutchouteux (14) étant destinée notamment à venir au contact de la jante (J), ladite troisième couche de mélange caoutchouteux (14) étant radialement vers l'extérieur au contact d'une quatrième couche de mélange caoutchouteux (16) formant la surface extérieure dudit flanc, **caractérisé en ce que**, dans une coupe méridienne dudit pneumatique (1) :
- la distance entre l'extrémité (8) du retournement de la couche d'armature de carcasse (7) et le point radialement le plus intérieur (A) du cercle (T) circonscrit à la tringle (4) est comprise entre 45 et 90 % de la distance entre le point axialement le plus extérieur (E) de la partie principale de la couche d'armature de carcasse (2) et le point radialement le plus intérieur (A) du cercle (T) circonscrit à la tringle (4),
- le retournement de la couche d'armature de carcasse (7) et la partie principale de la couche d'armature de carcasse (2) sont les seules couches d'éléments de renforcement dont l'allongement à rupture est inférieur à 6 % présentes dans une zone du flanc constituant au moins 90 % de la zone comprise entre l'extrémité (8) du retournement de la couche d'armature de carcasse (7) et le point radialement le plus extérieur (B) de la tringle (4),
- un module de communication radiofréquence (20) est disposé dans le bourrelet (3) à l'intérieur de la deuxième couche de mélange caoutchouteux (11), et
- le module de communication radiofréquence (20) est situé à une distance de l'interface entre le deuxième mélange caoutchouteux (11) et le retournement de l'armature de carcasse (7) supérieure à 2 mm.

2. Pneumatique (1) selon la revendication 1, dans lequel le retournement de la couche d'armature de carcasse (7) et la partie principale de la couche d'armature de carcasse (2) sont couplés radialement vers l'extérieur à partir d'un point C du retournement de la couche d'armature de carcasse (7) situé à une distance comprise entre 30 et 55 %, de la distance entre l'extrémité (8) du retournement de la couche d'armature de carcasse (7) et le point radialement le plus intérieur (A) du cercle (T) circonscrit à la tringle (4), c'est-à-dire que la partie principale de la couche d'armature de carcasse (2) et le retournement de la couche d'armature de carcasse (7) sont séparés par une première épaisseur de la première couche de mélange caoutchouteux (9) d'au plus 5mm sur une longueur supérieure à 15 % de la distance entre l'extrémité (8) du retournement de la couche d'armature de carcasse (7) et le point (A) radialement le plus intérieur du cercle (T) circonscrit à la tringle (4), la première épaisseur étant mesurée selon la direction normale à la partie principale de la couche d'armature de carcasse (2), et dans lequel le module de communication radiofréquence (20) est disposé radialement extérieurement au-delà du point C.

3. Pneumatique (1) selon la revendication 2, dans lequel radialement vers l'extérieur à partir dudit point C du retournement de la couche d'armature de carcasse (7), le retournement de la couche d'armature de carcasse (7) et la partie principale de la couche d'armature de carcasse (2) sont couplés sur une longueur comprise entre 15 et 65 % de la distance entre l'extrémité (8) du retournement de la couche d'armature de carcasse (7) et le point (A) radialement le plus intérieur du cercle (T) circonscrit à la tringle (4), pour être ensuite découplés par la première couche de mélange caoutchouteux (9) jusqu'à l'extrémité (8) du retournement de la couche d'armature de carcasse (7), c'est à-dire que la partie principale de la couche d'armature de carcasse (2) et le retournement de la couche d'armature de carcasse (7) sont séparés par une seconde épaisseur de la première couche de mélange caoutchouteux (9) supérieure à la première épaisseur, la seconde épaisseur étant mesurée selon la direction normale à la partie principale de la couche d'armature de carcasse (2), et dans lequel le module de communication radiofréquence (20) est disposé radialement en regard de ladite zone de couplage entre le retournement (7) et la partie principale de l'armature de carcasse (2).

4. Pneumatique (1) selon l'une quelconque des revendications 2 et 3, dans lequel la longueur de découplage est comprise entre 5 et 40 % de la distance entre l'extrémité (8) du retournement de la couche d'armature de carcasse (7) et le point radialement le plus intérieur (A) du cercle (T) circonscrit à la tringle (4) et de préférence comprise entre 15 et 35 % de la distance entre l'extrémité (8) du retournement de la couche d'armature de carcasse (7) et le point radialement le plus intérieur (A) du cercle (T) circonscrit à la tringle (4).

5. Pneumatique (1) selon l'une des revendications 1 à 4, dans lequel le retournement de la couche d'armature de carcasse (7) et la partie principale de la couche d'armature de carcasse (2) sont couplés sur une longueur comprise entre 25 et 40 % de la distance entre l'extrémité (8) du retournement de la couche d'armature de carcasse (7) et le point radialement le plus intérieur (A) du cercle (T) circonscrit à la tringle (4).

6. Pneumatique (1) selon l'une des revendications 1 à 5, dans lequel, dans la zone de couplage, l'épaisseur de la première couche de mélange caoutchouteux (9) est sensiblement constante et comprise entre 0,8 et 5 mm et de préférence entre 2,5 et 3,5 mm.

7. Pneumatique (1) selon l'une quelconque des revendications précédentes, dans lequel l'extrémité radialement intérieure (13) de la deuxième couche de mélange caoutchouteux (11) est radialement comprise entre le point radialement le plus extérieur (B) du cercle (T) circonscrit à la tringle (4) et le point radialement le plus intérieur (A) du cercle (T) circonscrit à la tringle (4).

8. Pneumatique (1) selon l'une quelconque des revendications précédentes, dans lequel le module d'élasticité sous tension à 10 % d'allongement des couches de calandrage de la couche d'armature de carcasse est compris entre 4 et 16 MPa et de préférence entre 8 et 12 MPa.

9. Pneumatique (1) selon l'une des revendications précédentes, dans lequel le module d'élasticité sous tension à 10 % d'allongement de la première couche de mélange caoutchouteux (9) est inférieur ou égal au module d'élasticité sous tension à 10 % d'allongement du calandrage de la couche d'armature de carcasse.

10. Pneumatique (1) selon l'une des revendications précédentes, dans lequel le module d'élasticité sous tension à 10 % d'allongement de la première couche de mélange caoutchouteux (9) est supérieur à 50 % du module d'élasticité sous tension à 10 % d'allongement du calandrage de la couche d'armature de carcasse et de préférence est supérieur à 70 % du module d'élasticité sous tension à 10 % d'allongement du calandrage de la couche d'armature de carcasse.

11. Pneumatique (1) selon l'une des revendications précédentes, dans lequel le module d'élasticité sous tension à 10 % d'allongement de la deuxième couche de mélange caoutchouteux (11) est inférieur à 150 % du module d'élasticité sous tension à 10 % d'allongement du calandrage de la couche d'armature de carcasse.

12. Pneumatique (1) selon l'une quelconque des revendications précédentes, dans lequel, le module de communication (20) est constitué dudit transpondeur radiofréquence (30, 100) encapsulé dans une masse de gomme d'enrobage (22, 22a, 22b) isolante électriquement.

13. Procédé de fabrication d'un pneumatique (1) comportant un module de communication radiofréquence (20) selon l'une quelconque des revendications précédentes, dans lequel :
- on fabrique une ébauche cylindrique comprenant une tringle (4) annulaire intercalée entre une armature de carcasse annulaire et un première couche de mélange caoutchouteux (9),
- on replie, autour de la tringle (4) une partie de l'armature de nappe carcasse sur la première couche de mélange caoutchouteux pour former un retournement de l'armature de carcasse (7);
- on créé une fente (52) à partir de la surface d'une deuxième couche de mélange caoutchouteux (11) et on introduit un module de communication (20) à l'intérieur de la fente (52),
- on vient déposer sur ledit retournement (7) la deuxième couche de mélange caoutchouteux (11) ; et
- on achève la fabrication de l'ébauche de pneumatique puis on vulcanise cette ébauche pour donner un pneumatique (1) ;
dans lequel la deuxième couche de mélange caoutchouteux (11) comporte noyé à l'intérieur le module de communication (20).

## Patentansprüche

1. Reifen (1), welcher dazu bestimmt ist, auf einer hohlen Felge vom Typ "15°-Steilschulterfelge" (J) montiert zu werden, und welcher eine radiale Karkassenbewehrung umfasst, die aus einer einzigen Karkassenbewehrungsschicht besteht, die von Verstärkungselementen gebildet wird, die zwischen zwei Kalandrierschichten aus Kautschukmischung eingefügt sind, wobei der Reifen (1) eine Scheitelbewehrung (5) umfasst, die ihrerseits radial von einem Laufstreifen (6) bedeckt ist, wobei der Laufstreifen (6) über zwei Seitenwände mit zwei Wülsten (3) verbunden ist, wobei die Schicht von Verstärkungselementen der Karkassenbewehrung (2) in jedem der Wülste (3) durch Umschlag um einen Wulstkern (4) verankert ist, um einen Hauptteil der Karkassenbewehrungsschicht (2), der sich von einem Wulstkern (4) zum anderen erstreckt, und einen umgeschlagenen Teil der Karkassenbewehrungsschicht (7) in jedem der Wülste (3) zu bilden, wobei der umgeschlagene Teil der Karkassenbewehrungsschicht (7) vom Hauptteil der Karkassenbewehrungsschicht (2) durch eine erste Schicht aus Kautschukmischung (9) getrennt ist, die sich radial vom Wulstkern (4) über das Ende (8) des umgeschlagenen Teils der Karkassenbewehrungsschicht (7) hinaus erstreckt, und wobei sich der umgeschlagene Teil der Karkassenbewehrungsschicht (7) axial außen mit einer zweiten Schicht aus Kautschukmischung (11) in Kontakt befindet, die sich ihrerseits wenigstens mit einer dritten Schicht aus Kautschukmischung (14) in Kontakt befindet, welche die Außenfläche des Reifens im Bereich des Wulstes (3) bildet, wobei die dritte Schicht aus Kautschukmischung (14) insbesondere dazu bestimmt ist, mit der Felge (J) in Kontakt zu kommen, wobei sich die dritte Schicht aus Kautschukmischung (14) radial außen mit einer vierten Schicht aus Kautschukmischung (16) in Kontakt befindet, welche die Außenfläche der Seitenwand bildet, **dadurch gekennzeichnet, dass** in einem Meridianschnitt des Reifens (1):
- der Abstand zwischen dem Ende (8) des umgeschlagenen Teils der Karkassenbewehrungsschicht (7) und dem radial innersten Punkt (A) des dem Wulstkern (4) umbeschriebenen Kreises (T) zwischen 45 und 90 % des Abstands zwischen dem axial äußersten Punkt (E) des Hauptteils der Karkassenbewehrungsschicht (2) und dem radial innersten Punkt (A) des dem Wulstkern (4) umbeschriebenen Kreises (T) beträgt,
- der umgeschlagene Teil der Karkassenbewehrungsschicht (7) und der Hauptteil der Karkassenbewehrungsschicht (2) die einzigen Schichten von Verstärkungselementen, deren Bruchdehnung kleiner als 6 % ist, sind, die in einem Bereich der Seitenwand vorhanden sind, der wenigstens 90 % des Bereichs zwischen dem Ende (8) des umgeschlagenen Teils der Karkassenbewehrungsschicht (7) und dem radial äußersten Punkt (B) des Wulstkerns (4) umfasst,
- ein Hochfrequenzkommunikationsmodul (20) in dem Wulst (3) im Inneren der zweiten Schicht aus Kautschukmischung (11) angeordnet ist und
- das Hochfrequenzkommunikationsmodul (20) sich in einem Abstand von der Grenzfläche zwischen der zweiten Kautschukmischung (11) und dem umgeschlagenen Teil der Karkassenbewehrung (7) befindet, der größer als 2 mm ist.

2. Reifen (1) nach Anspruch 1, wobei der umgeschlagene Teil der Karkassenbewehrungsschicht (7) und der Hauptteil der Karkassenbewehrungsschicht (2) radial außen ab einem Punkt C des umgeschlagenen Teils der Karkassenbewehrungsschicht (7) gekoppelt sind, der sich in einem Abstand befindet, der zwischen 30 und 55 % des Abstands zwischen dem Ende (8) des umgeschlagenen Teils der Karkassenbewehrungsschicht (7) und dem radial innersten Punkt (A) des dem Wulstkern (4) umbeschriebenen Kreises (T) beträgt, das heißt, dass der Hauptteil der Karkassenbewehrungsschicht (2) und der umgeschlagene Teil der Karkassenbewehrungsschicht (7) auf einer Länge, die größer als 15 % des Abstands zwischen dem Ende (8) des umgeschlagenen Teils der Karkassenbewehrungsschicht (7) und dem radial innersten Punkt (A) des dem Wulstkern (4) umbeschriebenen Kreises (T) ist, durch eine erste Dicke der ersten Schicht aus Kautschukmischung (9) von höchstens 5mm getrennt sind, wobei die erste Dicke in der zum Hauptteil der Karkassenbewehrungsschicht (2) senkrechten Richtung gemessen wird und wobei das Hochfrequenzkommunikationsmodul (20) radial außen jenseits des Punktes C angeordnet ist.

3. Reifen (1) nach Anspruch 2, wobei radial außen ab dem Punkt C des umgeschlagenen Teils der Karkassenbewehrungsschicht (7) der umgeschlagene Teil der Karkassenbewehrungsschicht (7) und der Hauptteil der Karkassenbewehrungsschicht (2) auf einer Länge gekoppelt sind, die zwischen 15 und 65 % des Abstands zwischen dem Ende (8) des umgeschlagenen Teils der Karkassenbewehrungsschicht (7) und dem radial innersten Punkt (A) des dem Wulstkern (4) umbeschriebenen Kreises (T) beträgt, um anschließend durch die erste Schicht aus Kautschukmischung (9) bis zum Ende (8) des umgeschlagenen Teils der Karkassenbewehrungsschicht (7) entkoppelt zu werden, das heißt, dass der Hauptteil der Karkassenbewehrungsschicht (2) und der umgeschlagene Teil der Karkassenbewehrungsschicht (7) durch eine zweite Dicke der ersten Schicht aus Kautschukmischung (9) getrennt sind, die größer als die erste Dicke ist, wobei die zweite Dicke in der zum Hauptteil der Karkassenbewehrungsschicht (2) senkrechten Richtung gemessen wird und wobei das Hochfrequenzkommunikationsmodul (20) radial gegenüber dem Kopplungsbereich zwischen dem umgeschlagenen Teil (7) und dem Hauptteil der Karkassenbewehrungsschicht (2) angeordnet ist.

4. Reifen (1) nach einem der Ansprüche 2 und 3, wobei die Länge der Entkopplung zwischen 5 und 40 % des Abstands zwischen dem Ende (8) des umgeschlagenen Teils der Karkassenbewehrungsschicht (7) und dem radial innersten Punkt (A) des dem Wulstkern (4) umbeschriebenen Kreises (T) und vorzugsweise zwischen 15 und 35 % des Abstands zwischen dem Ende (8) des umgeschlagenen Teils der Karkassenbewehrungsschicht (7) und dem radial innersten Punkt (A) des dem Wulstkern (4) umbeschriebenen Kreises (T) beträgt.

5. Reifen (1) nach einem der Ansprüche 1 bis 4, wobei der umgeschlagene Teil der Karkassenbewehrungsschicht (7) und der Hauptteil der Karkassenbewehrungsschicht (2) auf einer Länge gekoppelt sind, die zwischen 25 und 40 % des Abstands zwischen dem Ende (8) des umgeschlagenen Teils der Karkassenbewehrungsschicht (7) und dem radial innersten Punkt (A) des dem Wulstkern (4) umbeschriebenen Kreises (T) beträgt.

6. Reifen (1) nach einem der Ansprüche 1 bis 5, wobei in dem Kopplungsbereich die Dicke der ersten Schicht aus Kautschukmischung (9) im Wesentlichen konstant ist und zwischen 0,8 und 5 mm und vorzugsweise zwischen 2,5 und 3,5 mm beträgt.

7. Reifen (1) nach einem der vorhergehenden Ansprüche, wobei das radial innere Ende (13) der zweiten Schicht aus Kautschukmischung (11) radial zwischen dem radial äußersten Punkt (B) des dem Wulstkern (4) umbeschriebenen Kreises (T) und dem radial innersten Punkt (A) des dem Wulstkern (4) umbeschriebenen Kreises (T) liegt.

8. Reifen (1) nach einem der vorhergehenden Ansprüche, wobei der Elastizitätsmodul unter Spannung bei 10 % Dehnung der Kalandrierschichten der Karkassenbewehrungsschicht zwischen 4 und 16 MPa und vorzugsweise zwischen 8 und 12 MPa beträgt.

9. Reifen (1) nach einem der vorhergehenden Ansprüche, wobei der Elastizitätsmodul unter Spannung bei 10 % Dehnung der ersten Schicht aus Kautschukmischung (9) kleiner oder gleich dem Elastizitätsmodul unter Spannung bei 10 % Dehnung der Kalandrierung der Karkassenbewehrungsschicht ist.

10. Reifen (1) nach einem der vorhergehenden Ansprüche, wobei der Elastizitätsmodul unter Spannung bei 10 % Dehnung der ersten Schicht aus Kautschukmischung (9) größer als 50 % des Elastizitätsmoduls unter Spannung bei 10 % Dehnung der Kalandrierung der Karkassenbewehrungsschicht und vorzugsweise größer als 70 % des Elastizitätsmoduls unter Spannung bei 10 % Dehnung der Kalandrierung der Karkassenbewehrungsschicht ist.

11. Reifen (1) nach einem der vorhergehenden Ansprüche, wobei der Elastizitätsmodul unter Spannung bei 10 % Dehnung der zweiten Schicht aus Kautschukmischung (11) kleiner als 150 % des Elastizitätsmoduls unter Spannung bei 10 % Dehnung der Kalandrierung der Karkassenbewehrungsschicht ist.

12. Reifen (1) nach einem der vorhergehenden Ansprüche, wobei das Kommunikationsmodul (20) aus dem Hochfrequenztransponder (30, 100) besteht, der in eine elektrisch isolierende Umhüllungsgummimasse (22, 22a, 22b) eingekapselt ist.

13. Verfahren zur Herstellung eines Reifens (1), der ein Hochfrequenzkommunikationsmodul (20) aufweist, nach einem der vorhergehenden Ansprüche, wobei:
- ein zylindrischer Rohling hergestellt wird, der einen ringförmigen Wulstkern (4) umfasst, der zwischen einer ringförmigen Karkassenbewehrung und einer ersten Schicht aus Kautschukmischung (9) angeordnet ist;
- um den Wulstkern (4) herum ein Teil der Karkassenlagenbewehrung auf die erste Schicht aus Kautschukmischung umgebogen wird, um einen umgeschlagenen Teil der Karkassenbewehrung (7) zu bilden;
- von der Oberfläche einer zweiten Schicht aus Kautschukmischung (11) aus ein Spalt (52) erzeugt wird und ein Kommunikationsmodul (20) ins Innere des Spalts (52) eingeführt wird;
- danach auf den umgeschlagenen Teil (7) die zweite Schicht aus Kautschukmischung (11) aufgebracht wird; und
- die Herstellung des Reifenrohlings beendet wird und anschließend dieser Rohling vulkanisiert wird, um einen Reifen (1) zu erhalten;
wobei die zweite Schicht aus Kautschukmischung (11) das in sie eingebettete Kommunikationsmodul (20) aufweist.

## Claims

1. Tyre (1) intended to be mounted on a drop-centre rim (15° drop centre) (J), comprising a radial carcass reinforcement, made up of a single carcass reinforcement layer formed of reinforcing elements inserted between two skim layers of rubber compound, said tyre (1) comprising a crown reinforcement (5), itself radially capped by a tread (6), said tread (6) being connected to two beads (3) by two sidewalls, the layer of reinforcing elements of the carcass reinforcement (2) being anchored in each of the beads (3) by being turned up around a bead wire (4) to form a main part of the carcass reinforcement layer (2), extending from one bead wire (4) to the other, and a turn-up of the carcass reinforcement layer (7) in each of the beads (3), said turn-up of the carcass reinforcement layer (7) being separated from the main part of the carcass reinforcement layer (2) by a first layer of rubber compound (9) extending radially from the bead wire (4) to beyond the end (8) of the turn-up of the carcass reinforcement layer (7), and said turn-up of the carcass reinforcement layer (7) being, axially towards the outside, in contact with a second layer of rubber compound (11), itself at least in contact with a third layer of rubber compound (14) that forms the exterior surface of the tyre in the region of the bead (3), said third layer of rubber compound (14) notably being intended to come into contact with the rim (J), said third layer of rubber compound (14) being, radially towards the outside, in contact with a fourth layer of rubber compound (16) that forms the exterior surface of said sidewall, **characterized in that,** in meridian section of said tyre (1):
- the distance between the end (8) of the turn-up of the carcass reinforcement layer (7) and the radially innermost point (A) of the circle (T) circumscribed on the bead wire (4) is between 45 and 90% of the distance between the axially outermost point (E) of the main part of the carcass reinforcement layer (2) and the radially innermost point (A) of the circle (T) circumscribed on the bead wire (4),
- the turn-up of the carcass reinforcement layer (7) and the main part of the carcass reinforcement layer (2) are the only layers of reinforcing elements of which the elongation at break is less than 6% that are present in a sidewall region making up at least 90% of the region comprised between the end (8) of the turn-up of the carcass reinforcement layer (7) and the radially outermost point (B) of the bead wire (4),
- a radiofrequency communication module (20) is positioned in the bead (3) on the inside of the second layer of rubber compound (11); and
- the radiofrequency communication module (20) is situated at a distance from the interface between the second rubber compound (11) and the turn-up of the carcass reinforcement (7) of greater than 2 mm

2. Tyre (1) according to claim 1, wherein the turn-up of the carcass reinforcement layer (7) and the main part of the carcass reinforcement layer (2) are coupled radially towards the outside starting from a point C on the turn-up of the carcass reinforcement layer (7), which point is situated at a distance between 30 and 55% of the distance between the end (8) of the turn-up of the carcass reinforcement layer (7) and the radially innermost point (A) of the circle (T) circumscribed on the bead wire (4), that is to say the main part of the carcass reinforcement layer (2) and of the turn-up (7) of the carcass reinforcement layer are separated by a first thickness of first layer of rubber compound (9) from at most 5 mm along a length greater than 15% of the distance between the end (8) of the turn-up (7) of the carcass reinforcement layer (2) and the radially innermost point A of the circle (T) circumscribed on the bead wire (4), and wherein the radiofrequency communication module (20) is positioned radially on the outside beyond the point C.

3. Tyre (1) according to Claim 2, wherein, radially towards the outside, starting from said point C of the turn-up of the carcass reinforcement layer (7), the turn-up of the carcass reinforcement layer (7) and the main part of the carcass reinforcement layer (2) are coupled along a length of between 15 and 65% of the distance between the end (8) of the turn-up of the carcass reinforcement layer (7) and the radially innermost point (A) of the circle (T) circumscribed on the bead wire (4), and are then decoupled by the first layer of rubber compound (9) as far as the end (8) of the turn-up of the carcass reinforcement layer (7), that is to say the main part of the carcass reinforcement layer (2) and of the turn-up (7) of the carcass reinforcement layer are separated by a second thicness of first layer of rubber compound (9) greater than the first thickness, the second thickness being measured in the direction normal to the main part of the carcass reinforcement layer (2), and wherein the radiofrequency communication module (20) is placed radially facing said region of coupling between the turn-up (7) and the main part of the carcass reinforcement (2).

4. Tyre (1) according to any one of Claims 2 and 3, wherein the decoupling length is between 5 and 40% of the distance between the end (8) of the turn-up of the carcass reinforcement layer (7) and the radially innermost point (A) of the circle (T) circumscribed on the bead wire (4), and is preferably between 15 and 35% of the distance between the end (8) of the turn-up of the carcass reinforcement layer (7) and the radially innermost point (A) of the circle (T) circumscribed on the bead wire (4).

5. Tyre (1) according to one of Claims 1 to 4, wherein the turn-up of the carcass reinforcement layer (7) and the main part of the carcass reinforcement layer (2) are coupled along a length of between 25 and 40% of the distance between the end (8) of the turn-up of the carcass reinforcement layer (7) and the radially innermost point (A) of the circle (T) circumscribed on the bead wire (4).

6. Tyre (1) according to one of Claims 1 to 5, wherein, in the coupling region, the thickness of the first layer of rubber compound (9) is substantially constant and between 0.8 and 5 mm, and preferably between 2.5 and 3.5 mm.

7. Tyre (1) according to any one of the preceding claims, wherein the radially inner end (13) of the second layer of rubber compound (11) is radially comprised between the radially outermost point (B) of the circle (T) circumscribed on the bead wire (4) and the radially innermost point (A) of the circle (T) circumscribed on the bead wire (4).

8. Tyre (1) according to any one of the preceding claims, wherein the tensile elastic modulus at 10% elongation of the skim layers of the carcass reinforcement layer (2) is between 4 and 16 MPa and preferably between 8 and 12 MPa.

9. Tyre (1) according to one of the preceding claims, wherein the tensile elastic modulus at 10% elongation of the first layer of rubber compound (9) is less than or equal to the tensile elastic modulus at 10% elongation of the skim rubber of the carcass reinforcement layer.

10. Tyre (1) according to one of the preceding claims, wherein the tensile elastic modulus at 10% elongation of the first layer of rubber compound (9) is greater than 50% of the tensile elastic modulus at 10% elongation of the skim rubber of the carcass reinforcement layer (2) and preferably is greater than 70% of the tensile elastic modulus at 10% elongation of the skim rubber of the carcass reinforcement layer.

11. Tyre (1) according to one of the preceding claims, wherein the tensile elastic modulus at 10% elongation of the second layer of rubber compound (11) is less than 150% of the tensile elastic modulus at 10% elongation of the skim rubber of the carcass reinforcement layer.

12. Tyre (1) according to any one of the preceding claims, wherein the communication module (20) consists of said radiofrequency transponder (30, 100) encapsulated in an electrically insulating encapsulating rubber mass (22, 22a, 22b).

13. Method for manufacturing a tyre (1) comprising a radiofrequency communication module (20) according to any one of the preceding claims, wherein:
- a cylindrical green tyre comprising an annular bead wire (4) interposed between an annular carcass reinforcement and a first layer of rubber compound (9) is manufactured,
- a part of the carcass ply reinforcement is folded, around the bead wire (4) onto the first layer of rubber compound to form a carcass reinforcement turn-up (7);
- a slot (52) is created starting from surface of a second layer of rubber compound (11) and the communication module (20) is introduced into the slot (52).
- the second layer of rubber compound (11) is applied to the said turn-up (7); and
- the manufacture of the green tyre is completed then this green tyre is vulcanized to yield a tyre (1);
wherein the second layer of rubber compound (11) comprises a communication module (20) embedded within it.
